(19) Europäisches Patentamt / European Patent Office / Office européen des brevets

(11) **EP 4 261 853 B1**

(12) **EUROPEAN PATENT SPECIFICATION**

(45) Date of publication and mention of the grant of the patent:
**04.03.2026 Bulletin 2026/10**

(21) Application number: **22736629.1**

(22) Date of filing: **11.01.2022**

(51) International Patent Classification (IPC):
*H01F 1/18* $^{(2006.01)}$        *B23K 26/362* $^{(2014.01)}$
*C21D 1/26* $^{(2006.01)}$        *C21D 6/00* $^{(2006.01)}$
*C21D 8/12* $^{(2026.01)}$        *C21D 9/00* $^{(2006.01)}$
*C22C 38/02* $^{(2006.01)}$        *B23K 26/00* $^{(2014.01)}$
*B23K 26/70* $^{(2014.01)}$        *B23K 103/04* $^{(2006.01)}$
*C21D 1/28* $^{(2006.01)}$        *C21D 9/46* $^{(2006.01)}$
*C22C 38/04* $^{(2006.01)}$        *C22C 38/06* $^{(2006.01)}$

(52) Cooperative Patent Classification (CPC):
**C21D 9/46; B23K 26/0093; B23K 26/362; B23K 26/70; C21D 1/26; C21D 1/28; C21D 6/008; C21D 8/125; C21D 8/1255; C21D 8/1261; C21D 8/1266; C21D 8/1272; C21D 8/1283; C21D 8/1294; C22C 38/02;** (Cont.)

(86) International application number:
**PCT/CN2022/071200**

(87) International publication number:
**WO 2022/148468 (14.07.2022 Gazette 2022/28)**

(54) **LOW-MAGNETOSTRICTIVE ORIENTED SILICON STEEL AND MANUFACTURING METHOD THEREFOR**

SILIZIUMSTAHL MIT NIEDRIGER MAGNETSTRIKTION UND HERSTELLUNGSVERFAHREN DAFÜR

ACIER AU SILICIUM ORIENTÉ FAIBLEMENT MAGNÉTOSTRICTIF ET PROCÉDÉ DE FABRICATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2021 CN 202110031202**

(43) Date of publication of application:
**18.10.2023 Bulletin 2023/42**

(73) Proprietor: **BAOSHAN IRON & STEEL CO., LTD.**
**Shanghai 201900 (CN)**

(72) Inventors:
  • **WU, Meihong**
    **Shanghai 201900 (CN)**
  • **LI, Guobao**
    **Shanghai 201900 (CN)**
  • **CHU, Shuangjie**
    **Shanghai 201900 (CN)**
  • **ZHAO, Zipeng**
    **Shanghai 201900 (CN)**
  • **LIU, Baojun**
    **Shanghai 201900 (CN)**
  • **SHEN, Kanyi**
    **Shanghai 201900 (CN)**
  • **YANG, Yongjie**
    **Shanghai 201900 (CN)**
  • **HU, Zhuochao**
    **Shanghai 201900 (CN)**
  • **JI, Yaming**
    **Shanghai 201900 (CN)**
  • **LING, Chen**
    **Shanghai 201900 (CN)**

(74) Representative: **Maiwald GmbH**
**Elisenhof**
**Elisenstraße 3**
**80335 München (DE)**

(56) References cited:
EP-B1- 2 602 343          CN-A- 103 080 352
CN-A- 104 203 486        CN-A- 105 339 510
CN-A- 106 460 111        CN-A- 107 210 109
CN-A- 111 748 731        JP-A- 2009 263 782
JP-A- 2012 031 519       JP-A- 2012 052 233
US-A- 4 363 677          US-A1- 2015 010 762
US-A1- 2017 182 591

(52) Cooperative Patent Classification (CPC): (Cont.)
**C22C 38/04; C22C 38/06; H01F 1/18;**
B23K 2103/04; C21D 2201/05

# EP 4 261 853 B1

**Description**

## TECHNICAL FIELD

The present invention relates to a type of steel material and its manufacturing method, in particular to the manufacturing method of low-magnetostrictive oriented silicon sheets.

## BACKGROUND

Currently, the existing transformer cores are commonly laminated or wound with oriented silicon steel. Transformer manufacturers primarily focus on two performance indicators: no-load loss characteristics and no-load excitation current characteristics, which correspond to the loss and the excitation power characteristics of the oriented silicon steel, respectively.

In recent years, with the increasing attention to the noise performance of transformers from the market and users, the noise performance of the transformers has become an equally important indicator as the no-load loss, which corresponds to the magnetostrictive characteristics of the oriented silicon steel. It should be noted that during alternating current excitation, the dimensional change of the oriented silicon steel plates due to magnetization are known as magnetostriction, which is one of the main sources of the transformer noise.

With the continuous optimization of processing techniques and transformer design in transformer enterprises, the magnetostriction of the oriented silicon steel has become the main source of the transformer noise. The mechanism behind the magnetostriction of the oriented silicon steel is the variation and rotation of 90° magnetic domains that deviate from the easy magnetization direction during the magnetization process.

The ideal state of the oriented silicon steel products is to have only 180° magnetic domains. However, in the actual finished product of the oriented silicon steel, due to the defects such as orientation deviations, inclusions and grain boundaries, small additional domains called lancet domains (90° domains) appear among the 180° magnetic domains to reduce the magnetostatic energy. Therefore, the magnetostriction can be effectively reduced by reducing 90° domains (closed domains).

In the prior art, the main methods used to reduce magnetostriction include: (1) improving the orientation degree of crystal planes of the <001> crystal plane of the finished product; (2) reducing the thickness of the finished products; and (3) increasing the tension of coatings. The reduction of the magnetostriction of the finished oriented silicon steel plate can be achieved by implementing these three technical solutions, thereby achieving a reduction in the transformer noise levels.

Chinese patent document CN107210109A, published on Sep. 27, 2017, titled "Oriented Electromagnetic Steel Plate, Manufacturing Method Therefor, and Prediction Method for Transformer Noise Characteristics", discloses an oriented electromagnetic steel plate, a manufacturing method therefor, and a prediction method for the transformer noise characteristics. For the magnetostrictive characteristics of the oriented electromagnetic steel plate, this patent discloses a technical solution of controlling a front/rear difference in tension of the forsterite film to be 0.5 MPa or more, while ensuring a front/rear difference in total tension of the forsterite film and the insulating coating is less than 0.5 MPa. By setting the number of acceleration/deceleration points that are present in a magnetostriction velocity level $d\lambda/dt$ in one period of magnetostrictive vibration to 4, and setting the magnitude of velocity level change between adjacent magnetostriction velocity level change points in an acceleration zone or deceleration zone of magnetostrictive vibration to be $3.0 \times 10^{-4} \sec^{-1}$ or less, the magnetostrictive characteristics can be reduced. However, this method, in which the tension difference between the forsterite coatings and the total tension difference between the forsterite coatings and the insulating coatings are adjusted, has limitations in improving the magnetostrictive difference between two surfaces of single-sided laser-etched oriented silicon steel substrates, and it is difficult to control and produce oriented electromagnetic steel plates with excellent noise characteristics and minimal magnetostrictive deviations between upper and lower surfaces in a batch, stable, and cost-effective manner.

Chinese patent document CN106460111A, published on Feb. 22, 2017, titled "Oriented Electromagnetic Steel Plate with Low Iron Loss and Low Magnetostriction", discloses an oriented electromagnetic steel plate with low iron loss and low magnetostriction. The oriented electromagnetic steel plate of the invention includes a steel plate base material, a primary coating formed on surfaces of the steel plate base material, and a tension insulating coating formed on the surfaces of the primary coating, wherein the coating satisfies the following conditions: the ratio of the thickness of the tension insulating coating to the thickness of the primary coating is $\in (0.1, 3)$, the thickness of the tension insulating coating is $\in (0.5, 4.5) \, \mu m$, and the total tension of the primary coating and the tension insulating coating is $\in (1, 10)$ MPa. Magnetic domain control is achieved by irradiating the surface of the tension insulating coating with a laser from above. A strip-like sample having a length of 300 mm in a direction parallel to a rolling direction of the grain-oriented electrical steel sheet and a length of 60 mm in a direction parallel to a transverse direction is extracted from the grain-oriented electrical steel sheet, a range from a surface of the tension insulating coating to a depth position of 5 $\mu m$ toward the base steel sheet side from an interface between the base steel sheet and the primary film is removed by pickling at least one surface of the sample, and a warpage amount of the sample is thereafter measured. In this case, the warpage amount satisfies specified conditions. However, this technical solution only considers the thickness and tension of the primary coatings and the tension insulating coatings. It has the limitations in improving the magnetostriction of the oriented silicon steel substrates, and it is difficult to control and produce oriented electromagnetic steel plates with excellent noise characteristics and minimal magnetostrictive deviations between upper and lower surfaces in a batch, stable and cost-effective manner.

Chinese patent document CN106029917A, published on Oct. 12, 2016, titled "Grain-Oriented

Electrical Steel Sheet for Low-Noise Transformer, and Method for Manufacturing Said Sheet", discloses an oriented electromagnetic steel plate, which is obtained by irradiating a steel sheet surface with an electron beam having a beam diameter d of 0.40 mm or less in a line region extending in a direction intersecting a rolling direction, wherein the modulated irradiation line region is formed with repeating units connected to each other in the line region direction, a periodic distance of the repeating units in the modulated irradiation line region is 2/3 × d mm to 2.5 × d mm, a repeating interval of the modulated irradiation line region in the rolling direction is 4.0 mm to 12.5 mm. The intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side. Therefore, it is possible to carry out magnetic domain refining treatment under a condition which achieves both low iron loss and low noise of the transformer at the same time which was conventionally considered difficult However, this technical solution only considers the influence of etching conditions on the magnetostriction and does not take into account the matching between the etching conditions and the coating conditions, so it is difficult to effectively and efficiently produce oriented electromagnetic steel plates with excellent noise characteristics and small magnetostrictive deviations between upper and lower surfaces in a batch, stable, and cost-effective manner.

EP 2 602 343 and US 2015/010762 describe a laser-etched oriented steel sheet with different coatings on both sides to compensate the deflection introduces by the laser etching.

## SUMMARY

The present invention aims to solve the problem of uneven stress distribution in existing oriented silicon steel due to single-sided laser etching, which causes the bending of the steel plate toward the etched surface, and leads to a significant magnetostrictive deviation between the etched surface and non-etched surface of the oriented silicon steel.

To achieve the above objectives, the present invention provides a manufacturing method for a low-magnetostrictive oriented silicon steel steel as specified in claim 1.

. The oriented silicon steel comprises a silicon steel substrate and insulating coatings on surfaces of the silicon steel substrate. The manufacturing method comprises: performing single-sided laser etching on the silicon steel substrate, wherein the side of the silicon steel substrate, on which single-sided laser etching is performed, is a first surface, and the side arranged opposite to the first surface is a second surface; determining a deflection difference between the first surface and the second surface based on the power of laser etching, and determining the difference in the amount of the insulating coatings on the first surface and the second surface based on the deflection difference; and forming insulating coatings on the first surface and the second surface, wherein the amount of the insulating coating on the second surface is greater than that on the first surface, and the amount of the insulating coating on the first surface and that on the second surface satisfy the difference in the amount of the insulating coatings.

In the technical solution of the present invention, the deflection (representing a distance from the center of the surface after the steel plate is bent to the original plate axis) difference between the first surface and the second surface of the silicon steel substrate can be determined according to the power of laser etching. Then the difference in the amount of the insulating coatings applied to the first surface and the second surface is obtained according to the deflection difference. The insulating coatings are applied to the first surface and the second surface based on the difference in the amount of the insulating coatings. In this way, the deflection difference between the first surface and the second surface of a finished product of oriented silicon steel caused by single-sided laser etching is reduced by adjusting the tension difference between the insulating coatings on the first surface and the second surface, thereby reducing the magnetostrictive deviation between the first surface and the second surface. Single-sided laser etching is a commonly used method in the prior art for refining the magnetic domains of the oriented silicon steel and reducing losses.

Furthermore, a method for forming insulating coatings comprises: coating the first surface and the second surface with insulating coating solution, and baking and sintering the insulating coating solution to form the insulating coatings on the first surface and the second surface. The steps of baking and sintering the insulating coating solution can be carried out according to the prior art.

Preferably, in the present invention, the power of laser etching is controlled to enable the obtained oriented silicon steel to exhibit an A-weighted magnetostriction velocity level of smaller than or equal to 55 db(A).

Furthermore, the power of laser etching in the present invention is set at 0.5-2.5 $mJ/mm^2$ to achieve the purpose of reducing the noise of a transformer iron core made from the oriented silicon steel during operation.

Furthermore, the power of laser etching is set at 1-2 mJ/mm$^2$ to further reduce the noise generated during the operation of the transformer iron core prepared from the oriented silicon steel of the present invention.

Furthermore, in the manufacturing method of the present invention, the deflection difference is determined based on the following formula:

$$\text{deflection difference} = 5.38 - 5.41 \times e^{-W/1.02}$$

wherein W represents the power of single-sided laser etching in mJ/mm$^2$, and the unit of the deflection difference is mm.

The formulas for calculating the deflection difference and the difference in the amount of the insulating coatings are an empirical formula derived by inventors using experimental data obtained by changing the parameters such as the thickness of the silicon steel substrate, the power of laser etching, the coating formulation, the coating thickness or the like, under the condition of specific etching equipment, and performing fitting according to the obtained data.

Furthermore, the difference in the amount of the insulating coatings is determined based on the following formula:

difference in the amount of the insulating coatings = $3 \times 10^{-5}$ - 0.407 $\times$ deflection difference

wherein the unit of the difference in the amount of the insulating coatings is g/m$^2$.

Furthermore, the amount of the insulating coating on the first surface is 4.0-4.5 g/m$^2$.

If the thickness of the insulating coating is too small, the tension imparted to the substrate by the insulating coating is low, resulting in insufficient magnetic optimization. If the thickness of the insulating coating is too large, it affects the stacking factor of the finished products, and meanwhile, it is easy to cause defects such as powder loss and white edges during the shearing process.

Furthermore, the thickness H of the silicon steel substrate is: 0. 18mm≤H≤0.23mm.

Generally, the thickness of the silicon steel substrate is greater than or equal to 0.18 mm. When the thickness of the substrate is greater than 0.23 mm, due to the increased thickness and increased rigidity, the sensitivity to the uneven stress distribution caused by laser etching decreases after the insulating coatings are formed on the surfaces. As a result, the deflection difference caused by uneven stress distribution from laser etching becomes smaller, making it unsuitable for the above-mentioned empirical formula.

Furthermore, the components of the insulating coating solution, in mass percentage, are as follows: at least one of aluminum dihydrogen phosphate and magnesium dihydrogen phosphate: 2%-25%, colloidal silicon dioxide: 4%-16%, chromic anhydride: 0.15%-4.50%, and the balance being water and other inevitable impurities.

The insulating coating is used to improve the insulation performance of the surfaces of the silicon steel substrate. The insulating coating solution widely used in the prior art is an aqueous solution mainly composed of chromic anhydride, colloidal SiO$_2$ and phosphates of Mg and Al. Furthermore, the silicon steel substrate in the present invention is prepared by the following steps according to the prior art: step a, smelting and casting; step b, heating; step c, normalizing; step d, cold rolling; step e, decarburization annealing; step f, final annealing; and step g, hot stretch annealing.

Furthermore, in step c, a two-stage normalizing treatment is performed on the silicon steel substrate: firstly, heating the silicon steel substrate to 1100-1200°C, then cooling it to 900-1000°C at a cooling rate of 1°C/s-10°C/s, and finally cooling it to room temperature at the cooling rate of 10°C/s to 70°C/s.

Furthermore, in step d cold rolling, either a primary cold rolling or a secondary cold rolling with an intermediate annealing step is performed.

Furthermore, in step e, a primary recrystallization annealing is performed at 800-900°C, followed by the application of the annealing isolation agent on the surface of the silicon steel substrate.

In the preparation process of the oriented silicon steel in the prior art, an annealing isolation agent, such as magnesium oxide, needs to be applied to the surface of the silicon steel substrate before a high-temperature final annealing to prevent adhesion between steel plates at high temperature.

Furthermore, in step f, the annealing temperature is controlled at 1100-1200°C, with a holding time of 20-30 hours.

Furthermore, in step g, firstly, the silicon steel substrate is heated to 800-900°C, then held for 10-30 seconds, and finally cooled to room temperature at the cooling rate of 5°C/s-50°C/s.

On the other hand, the present invention provides a low-magnetostrictive oriented silicon steel, which exhibits a minimal magnetostriction deviation between the etched surface and non-etched surface of the oriented silicon steel, and has a good average magnetostriction.

Vibration generated by the iron core prepared from the low-magnetostrictive oriented silicon steel of the present invention is small, so that the overall noise level of transformers with such iron core is low.

To achieve the above objectives, the manufacturing method provides a low-magnetostrictive oriented silicon steel, which is prepared by the manufacturing method for a low-magnetostrictive oriented silicon steel, wherein the magnetostrictive deviation between the first surface and the second surface of the oriented silicon steel is smaller than or equal to 2 db(A), and the average magnetostriction of the oriented silicon steel is smaller than or equal to 55 db(A).

Compared to the prior art, the low-magnetostrictive oriented silicon steel and the manufacturing method therefor of the present invention have the following advantages and beneficial effects:

By using the manufacturing method of the present invention, the difference in the amount of the insulating coatings on the first surface and the second surface can be obtained according to the deflection difference between the etched surface and the non-etched surface of the steel substrate, so as to adjust the tension of insulating coatings on the etched surface (the first surface) and the non-etched surface (the second surface), thereby reducing the magnetostrictive deviation between the etched surface and the non-etched surface.

According to the present invention, the prepared low-magnetostrictive oriented silicon steel achieves a magnetostrictive deviation between the etched surface and the non-etched surface of the oriented silicon steel of ≤ 2db (A) and an average magnetostriction of ≤ 55 db (A). The vibration generated by the iron core prepared from the low-magnetostrictive oriented silicon steel is small, so that the overall noise level of the transformer with such iron core is low.

## BRIEF DESCRIPTION OF THE DRAWINGS

Fig. 1 shows a curve of the magnetostriction of the etched surface of the oriented silicon steel in the present invention with varying energy density of laser etching;

Fig. 2 shows a curve of the deflection difference between the first surface and the second surface of the silicon steel substrate of the present invention with varying energy density of laser etching, after single-sided laser etching is performed on the silicon steel substrate; and

Fig. 3 shows the difference in the amount of the insulating coatings on the first surface and the second surface required for maintain the straightness of silicon steel substrate of the present invention under different deflection differences.

## DETAILED DESCRIPTION

Implementation modes of the present invention will be described below through particular specific embodiments, and those skilled in the art could easily understand other advantages and effects of the present invention from the contents disclosed in this description. Although the description of the present invention will be introduced in conjunction with the preferred embodiments, it should be understood that the features of the present invention are limited to these implementation modes. On the contrary, the purpose of introducing the present invention in conjunction with the implementation modes is to cover other options or modifications that may be derived based on the claims of the present invention. In order to provide a thorough understanding of the present invention, many specific details will be included in the following. The present invention can also be implemented without these details. In addition, in order to avoid confusion or ambiguity in the focus of the present invention, some specific details will be omitted in the description. It should be noted that, unless conflicting, the embodiments in the present invention and the features in the embodiments can be combined with each other.

## Examples 1-6 and Comparative Examples 1-4

Silicon steel substrates in Examples 1-6 and comparative steel plates in Comparative Examples 1-4 are prepared by the following steps:

Smelting and casting: performing smelting according to chemical composition shown in Table 1 and casting into slab;

Heating: heating the slab to 1200-1280°C, holding it for 1-4 hours, and hot-rolling it into steel strip;

Normalizing: adopting a two-stage normalizing treatment, firstly, heating the steel strip to 1100-1200°C, then cooling it to 900-1000°C at the cooling rate of 1°C/s-10°C/s, followed by cooling it to room temperature at a cooling rate of 10°C/s-70°C/s;

Cold rolling: performing a primary cold rolling or a secondary cold rolling with intermediate annealing step;

Decarburization annealing: performing a primary recrystallization annealing at a temperature of 800-900°C, followed by coating with annealing isolation agent;

Final annealing: the annealing temperature is 1100-1200°C, and the holding time is 20-30 hours; and

Hot stretch annealing: firstly, heating the steel strip to 800-900°C, holding it for 10-30 seconds, and then cooling it to room temperature at a cooling rate of 5°C/s-50°C/s, to obtain the silicon steel substrate.

It should be noted that, in the present invention, the related operations and specific manufacturing process parameters of the oriented silicon steel in Examples 1-6 of the present invention satisfy preferred design specifications of technical solutions of the present invention. However, the comparative steel plates in Comparative Examples 1-4 do not control the difference in the amount of the insulating coatings corresponding to the deflection difference between two surfaces caused by laser etching.

Table 1 lists the mass percentages of various chemical elements of the silicon steel substrates and the thicknesses of finished products of the oriented silicon steel in the low-noise oriented silicon steel in Examples 1-6 and the comparative steel plates in Comparative Examples 1-4. In the following Examples and Comparative Examples, the balance of chemical components of the silicon steel substrate/plate is Fe and other inevitable impurities.

Table 1

| Number | C | Si | Mn | Als | N | Thickness H of finished product (mm) |
|---|---|---|---|---|---|---|
| Example 1 | 0.061 | 3.25 | 0.011 | 0.026 | 0.0083 | 0.23 |
| Example 2 | 0.060 | 3.24 | 0.020 | 0.027 | 0.009 | 0.2 |
| Example 3 | 0.065 | 3.12 | 0.017 | 0.0288 | 0.0087 | 0.18 |
| Example 4 | 0.055 | 3.19 | 0.012 | 0.029 | 0.0079 | 0.23 |
| Example 5 | 0.058 | 3.15 | 0.022 | 0.0296 | 0.0089 | 0.2 |
| Example 6 | 0.067 | 3.30 | 0.025 | 0.0292 | 0.0092 | 0.18 |
| Comparative Example 1 | 0.061 | 3.33 | 0.009 | 0.0274 | 0.0088 | 0.23 |
| Comparative Example 2 | 0.063 | 3.28 | 0.022 | 0.0281 | 0.0080 | 0.23 |
| Comparative Example 3 | 0.066 | 3.21 | 0.015 | 0.0291 | 0.0084 | 0.2 |
| Comparative Example 4 | 0.058 | 3.29 | 0.018 | 0.0268 | 0.0078 | 0.18 |

In the present invention, in order to obtain the oriented silicon steel with desired performance, single-sided laser etching is performed on the silicon steel substrate. The power of laser etching determines the deflection difference between the first surface and the second surface, and based on this deflection difference, the difference in the amount of the insulating coatings is determined. Then, the insulating coatings are formed on the first surface and the second surface to obtain the oriented silicon steel. The amount of coatings on the surfaces of the silicon steel substrate needs to satisfy the following conditions: the amount of the insulating coating on the second surface is greater than that on the first surface, and the amount of insulating coating on the first surface and that on the second surface satisfy the difference in the amount of the insulating coatings.

The specific chemical compositions of the insulating coating solution applied to the silicon steel substrates of Examples 1-6 and the comparative steel plates of Comparative Examples 1-4, in mass percentage, can be expressed as follows: at least one of aluminum dihydrogen phosphate or magnesium dihydrogen phosphate: 2%-25%; colloidal silicon dioxide: 4%-16%, chromic anhydride: 0.15%-4.50%, and the balance of water and other inevitable impurities.

Table 2 lists specific chemical compositions of the insulating coating solution applied to the surfaces of the silicon steel substrates in Examples 1-6 and the comparative steel plates in Comparative Examples 1-4.

Table 2 (wt%, with the balance being water and other inevitable impurities)

| Number | Aluminum dihydrogen phosphate | Magnesium dihydrogen phosphate | Colloidal silicon dioxide | Chromic anhydride |
|---|---|---|---|---|
| Example 1 | 2% | 0 | 4% | 0.15% |
| Example 2 | 0 | 2% | 8% | 1% |
| Example 3 | 4% | 4% | 10% | 2% |
| Example 4 | 8% | 8% | 14% | 3% |
| Example 5 | 25% | 0 | 16% | 4% |
| Example 6 | 0 | 25% | 16% | 4.5% |
| Comparative Example 1 | 12% | 0 | 16% | 4.5% |
| Comparative Example 2 | 0 | 8% | 10% | 2% |

(continued)

| Number | Aluminum dihydrogen phosphate | Magnesium dihydrogen phosphate | Colloidal silicon dioxide | Chromic anhydride |
|---|---|---|---|---|
| Comparative Example 3 | 10% | 10% | 15% | 3% |
| Comparative Example 4 | 10% | 5% | 15% | 2% |

Table 3-1 lists the specific parameters of the manufacturing processes of the silicon steel substrates in Examples 1-6 and comparative steel plates in Comparative Examples 1-4.

Table 3-1

| Serial Number | Normalizing | | | | | Decarburization annealing | Final annealing | | Hot stretch annealing | | |
|---|---|---|---|---|---|---|---|---|---|---|---|
| | Heating temperature (°C) | Cooling rate for the first cooling (°C/s) | Temperature after the first cooling (°C) | Cooling rate for the second cooling (°C/s) | Temperature after cooling (°C) | Primary recrystallization annealing temperature (°C) | Annealing temperature (°C) | Holding time (h) | Heating temperature (°C) | Holding time (s) | Cooling rate (°C/s) |
| Example 1 | 1110 | 2 | 900 | 10 | 20 | 800 | 1100 | 30 | 900 | 10 | 5 |
| Example 2 | 1120 | 4 | 930 | 20 | 20 | 820 | 1150 | 25 | 850 | 20 | 10 |
| Example 3 | 1140 | 5 | 930 | 30 | 20 | 840 | 1200 | 20 | 800 | 30 | 30 |
| Example 4 | 1150 | 8 | 950 | 4 | 20 | 810 | 1100 | 30 | 900 | 10 | 50 |
| Example 5 | 1120 | 9 | 940 | 55 | 20 | 875 | 1150 | 25 | 850 | 20 | 40 |
| Example 6 | 1200 | 3 | 1000 | 60 | 20 | 900 | 1200 | 20 | 800 | 30 | 20 |
| Comparative Example 1 | 1120 | 3 | 920 | 20 | 20 | 825 | 1100 | 30 | 900 | 10 | 10 |
| Comparative Example 2 | 1140 | 4 | 940 | 20 | 20 | 830 | 1150 | 25 | 850 | 20 | 7 |
| Comparative Example 3 | 1150 | 10 | 930 | 15 | 20 | 830 | 1200 | 20 | 800 | 30 | 20 |
| Comparative Example 4 | 1110 | 2 | 900 | 12 | 20 | 805 | 1200 | 20 | 800 | 30 | 40 |

Table 3-2 lists the power of single-sided laser etching performed on the silicon steel substrates in Examples 1-6 and the comparative steel plates in Comparative Examples 1-4, and deflection differences, the amount of insulating coatings on surfaces, and the difference in the amount of the insulating coatings between the two surfaces of finally obtained oriented silicon steel.

Table 3-2

| Number | Power of laser etching (mJ/mm$^2$) | Deflection difference (mm) | Amount of the insulating coating on the first surface (g/m$^2$) | Amount of the insulating coating on the second surface (g/m$^2$) | Difference in the amount of insulating coatings between the first surface and the second surfaces (g/m$^2$) |
|---|---|---|---|---|---|
| Example 1 | 0.5 | 2.1 | 4.1 | 5 | -0.9 |
| Example 2 | 1 | 3.3 | 4 | 5.3 | -1.3 |
| Example 3 | 1.5 | 4.1 | 4.2 | 5.9 | -1.7 |
| Example 4 | 2 | 4.6 | 4.3 | 6.2 | -1.9 |
| Example 5 | 2.2 | 4.7 | 4.2 | 6.1 | -1.9 |
| Example 6 | 2.5 | 4.9 | 4.5 | 6.5 | -2.0 |
| Comparative Example 1 | 0.5 | 2.1 | 4.5 | 4.5 | 0 |
| Comparative Example 2 | 1 | 3.3 | 4.5 | 4.5 | 0 |
| Comparative Example 3 | 2 | 4.7 | 4.5 | 4.5 | 0 |
| Comparative Example 4 | 2.5 | 4.9 | 4.5 | 4.5 | 0 |

The prepared oriented silicon steel in Examples 1-6 and comparative steel plates in Comparative Examples 1-4 were sampled respectively. A non-contact laser Doppler vibrometer, TD9600, was used to measure the magnetostrictive performance (A-weighted magnetostriction velocity level LvA) of the steel plate samples in the examples and comparative examples under the conditions of B=1.7T, f=-2MPa (in the actual working condition of transformers, the oriented silicon steel is subjected to a compressive stress of 2-3 MPa). The specific measurement method can be found in the international electrotechnical commission (IEC) technical report-IEC/TP 62581. The obtained test results of the magnetostrictive performance of each examples and comparative examples are listed in Table 4.

Table 4 lists the performance test results of the oriented silicon steel with low noise characteristics in Examples 1-6 and the comparative steel plates in Comparative Examples 1-4.

Table 4

| Number | Magnetostriction of the first surface LvA1 db(A) | Magnetostriction of the second surface LvA2 db(A) | LvA2-LvA1 db(A) | Average magnetostriction LvA db(A) |
|---|---|---|---|---|
| Example 1 | 53.2 | 53.4 | 0.2 | 53.3 |
| Example 2 | 52.8 | 52.4 | 0.4 | 52.6 |
| Example 3 | 53.5 | 53.6 | 0.1 | 53.55 |
| Example 4 | 53.2 | 53.5 | 0.3 | 53.35 |
| Example 5 | 52.2 | 53.3 | 1.1 | 52.75 |
| Example 6 | 53.5 | 53.8 | 0.3 | 53.65 |
| Comparative Example 1 | 54.2 | 59.3 | 5.1 | 56.75 |
| Comparative Example 2 | 53.5 | 63.2 | 9.7 | 58.35 |
| Comparative Example 3 | 53.5 | 64.5 | 11 | 59 |
| Comparative Example 4 | 53 | 65.5 | 12.5 | 59.25 |

Accordingly, 240KVA three-phase transformers were further prepared using the oriented silicon steel in Examples 1-6 and the comparative steel plates in Comparative Examples 1-4. The noise detection was carried out on each three-phase transformer prepared in the examples and comparative examples under the magnetization condition of 50 Hz and 1.7 T (GB/T 1094.10-2003). The test results obtained are listed in Table 5.

Table 5 lists the noise test results of the 240KVA three-phase transformers prepared using low-noise oriented silicon steel in Examples 1-6 and the comparative steel plates in Comparative Examples 1-4.

Table 5

| Number | Noise db(A) |
| --- | --- |
| Example 1 | 54.5 |
| Example 2 | 54 |
| Example 3 | 54.3 |
| Example 4 | 55.9 |
| Example 5 | 56 |
| Example 6 | 56.2 |
| Comparative Example 1 | 58.5 |
| Comparative Example 2 | 60.6 |
| Comparative Example 3 | 60.2 |
| Comparative Example 4 | 60.4 |

Combining Table 4 and Table 5, it can be observed that compared to Comparative Examples 1-4, the performance of each example of the present invention is superior. The magnetostrictive deviation between the first surface and the second surface of the low-magnetostrictive oriented silicon steel in each Example is significantly smaller than that of the comparative steel plates in Comparative Examples 1-4.

As shown in Table 4, the magnetostrictive deviation between the first surfaces and the second surfaces of the oriented silicon steel in Examples 1-6 is $\leq 2$ db (A), and the average magnetostriction is $\leq 55$ db (A). Furthermore, as shown in Table 5, compared to Comparative Examples 1-4, the overall noise level of the 240KVA three-phase transformers prepared using the low-noise oriented silicon steel in Examples 1-6 is significantly lower.

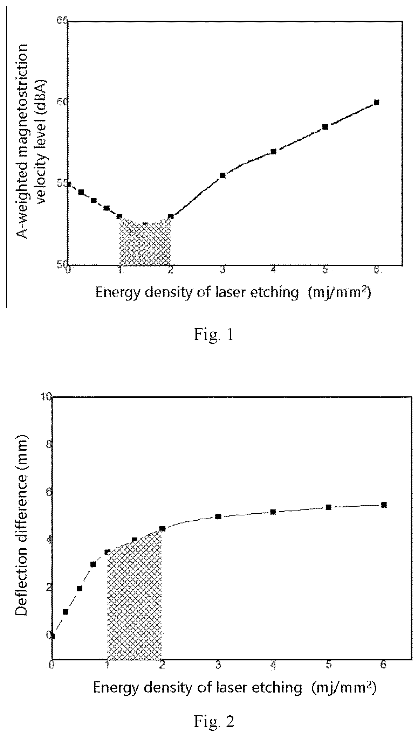

Fig. 1 shows the curve of magnetostriction of the etched surface of oriented silicon steel of the present invention as a function of the energy density of laser etching, with the shaded area corresponding to the performance of the oriented silicon steel in Examples 2-4. It can be seen that with the increase of energy density of laser etchning, an improvement rate of magnetic performance (iron loss reduction) initially increases and then stablizes, and the magnetostrictive performance initially decreases and then increases.

Fig. 2 shows the curve of the deflection difference between the first surface and the second surface of the silicon steel substrate in the present invention after the single-sided laser etching, as a function of the energy density of laser etching, with the shaded area corresponding to the performance of the silicon steel substrate in Examples 2-4. It can be seen that with the increase of energy density of laser etching, the deflection difference between the first surface and the second surface of the silicon steel substrate initially increases exponentially and then stabilizes.

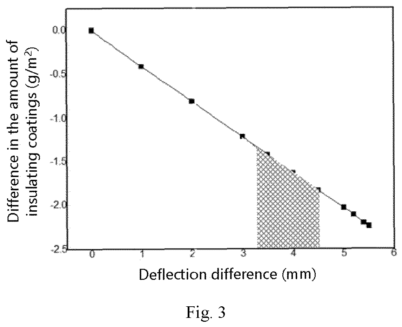

Fig. 3 shows the difference in the amount of the insulating coatings on the first surface and the second surface required for the silicon steel substrate of the present invention to maintain straightness under the condition of different deflection differences. The shaded area corresponds to the performance of the silicon steel substrate in Examples 2-4. It can be seen that in order to maintain the straightness of the finished oriented silicon steel and reduce the magnetostrictive deviation between the two surfaces, and it is necessary to adjust the difference in the amount of the insulating coatings on the first surface and the second surface based on the deflection difference caused by laser etching.

In conclusion, the manufacturing method for the low-magnetostrictive oriented silicon steel of the present invention can adjust the tension difference of the insulating coatings between the etched surface and the non-etched surface of the silicon steel substrate based on the deflection difference between the etched surface and the non-etched surface of the silicon steel substrate after single-sided laser etching, thereby reducing the magnetostrictive deviation between the etched surface and the non-etched surface of the oriented silicon steel.

The low-magnetostrictive oriented silicon steel prepared using the manufacturing method can achieve a magnetostrictive deviation between the etched surface and the non-etched surface of the oriented silicon steel $\leq 2$ db(A) and an average magnetostriction $\leq 55$ db(A). The vibrations generated by the iron core made of the low-magnetostrictive oriented silicon steel are small, resulting in a low overall noise level of transformers with such iron cores.

Although the present invention has been illustrated and described with reference to certain preferred embodiments, those skilled in the art should understand that the above content is a further detailed description of the present invention in combination with specific embodiments.

## Claims

1. A manufacturing method for a low-magnetostrictive oriented silicon steel, wherein the oriented silicon steel comprises a silicon steel substrate and insulating coatings on surfaces of the silicon steel substrate, and the manufacturing method comprises:

   performing single-sided laser etching on the silicon steel substrate, wherein a side of the silicon steel substrate, on which the single-sided laser etching is performed, is a first surface, and a side opposite to the first surface is a second surface;
   determining a deflection difference between the first surface and the second surface based on the power of the laser etching, and determining a difference in the amount of the insulating coatings on the first surface and the second surface based on the deflection difference; and
   forming the insulating coatings on the first surface and the second surface, wherein the amount of the insulating coating on the second surface is greater than that on the first surface, and the amount of the insulating coating on the first surface and that on the second surface satisfy the requirement on the difference in the amount of the insulating coatings.

2. The manufacturing method according to claim 1, wherein a method for forming the insulating coatings comprises: coating the first surface and the second surface with insulating coating solution, and baking and sintering the insulating coating solution to form the insulating coatings on the first surface and the second surface.

3. The manufacturing method according to claim 1, wherein the power of the laser etching is 0.5-2.5 mJ/mm$^2$.

4. The manufacturing method according to claim 3, wherein the power of the laser etching is 1-2 mJ/mm$^2$.

5. The manufacturing method according to claim 1, wherein the deflection difference is determined based on the following formula:

$$\text{deflection difference} = 5.38 - 5.41 \times e^{-W/1.02}$$

   wherein W represents the power of the laser etching in mJ/mm$^2$, and the unit of the deflection difference is mm.

6. The manufacturing method according to claim 5, wherein the difference in the amount of the insulating coatings is determined based on the following formula:

   difference in the amount of the insulating coatings = 3 $\times$ 10$^{-5}$ - 0.407 $\times$ deflection difference

   wherein the unit of the difference in the amount of the insulating coatings is g/m$^2$.

7. The manufacturing method according to claim 1, wherein the amount of the insulating coating on the first surface is 4.0-4.5 g/m$^2$.

8. The manufacturing method according to claim 1, wherein the thickness H of the silicon steel substrate is: 0.18mm$\leq$H$\leq$0.23mm.

9. The manufacturing method according to claim 2, wherein the components of the insulating coating solution, in mass percentage, are as follows:

   at least one of aluminum dihydrogen phosphate and magnesium dihydrogen phosphate: 2%-25%;
   colloidal silicon dioxide: 4%-16%;
   chromic anhydride: 0.15%-4.50%; and
   the balance being water and other inevitable impurities.

10. The manufacturing method according to claim 1, wherein the silicon steel substrate is manufactured through the following steps in sequence:

> step a: smelting and casting;
> step b: heating;
> step c: normalizing;
> step d: cold rolling;
> step e: decarburization annealing;
> step f: final annealing; and
> step g: hot stretch annealing.

11. The manufacturing method according to claim 10, wherein the manufacturing method satisfies at least one of the following manufacturing process conditions:

> in step c, performing a two-stage normalizing treatment on the silicon steel substrate: firstly, heating the silicon steel substrate to 1100-1200°C, then cooling it to 900-1000°C at a cooling rate of 1°C/s to 10°C/s, and finally cooling it to room temperature at a cooling rate of 10°C/s to 70°C/s;
> in step d, performing either a primary cold rolling or a secondary cold rolling with an intermediate annealing step;
> in step e, performing a primary recrystallization annealing at 800-900°C, followed by coating the surfaces of the silicon steel substrate with an annealing isolation agent;
> in step f, controlling an annealing temperature at 1100-1200°C, and holding it for 20-30 hours; and
> in step g, firstly, heating the silicon steel substrate to 800-900°C, holding it for 10-30 seconds, and then cooling it to room temperature at the cooling rate of 5°C/s to 50°C/s.

**Patentansprüche**

1. Verfahren zur Herstellung eines magnetostriktiven, orientierten Siliziumstahls, wobei der orientierte Siliziumstahl ein Siliziumstahlsubstrat und isolierende Beschichtungen auf den Oberflächen des Siliziumstahlsubstrats umfasst und das Herstellungsverfahren umfasst:

> einseitiges Laserätzen des Siliziumstahlsubstrats, wobei eine Seite des Siliziumstahlsubstrats, auf der das einseitige Laserätzen ausgeführt wird, eine erste Oberfläche ist und eine Seite, die der ersten Oberfläche gegenüberliegt, eine zweite Oberfläche ist,
> Bestimmen der Durchbiegungsdifferenz zwischen der ersten Oberfläche und der zweiten Oberfläche in Abhängigkeit von der Laserleistung und Bestimmen der Differenz der Menge der isolierenden Beschichtungen auf der ersten Oberfläche und der zweiten Oberfläche in Abhängigkeit von dieser Durchbiegungsdifferenz und
> Ausbilden der isolierenden Beschichtungen auf der ersten Oberfläche und der zweiten Oberfläche, wobei die Menge der isolierenden Beschichtung auf der zweiten Oberfläche größer ist als auf der ersten Oberfläche und die Menge der isolierenden Beschichtung auf der ersten Oberfläche und die auf der zweiten Oberfläche die Anforderung an die Differenz der Menge der isolierenden Beschichtungen erfüllen.

2. Herstellungsverfahren nach Anspruch 1, wobei das Verfahren zur Ausbildung der isolierenden Beschichtungen umfasst: Beschichten der ersten Oberfläche und zweiten Oberfläche mit einer Lösung der isolierenden Beschichtungen und anschließendes Einbrennen und Sintern der Lösung der isolierenden Beschichtungen, um isolierende Beschichtungen auf der ersten Oberfläche und zweiten Oberfläche zu bilden.

3. Herstellungsverfahren nach Anspruch 1, wobei die Leistung des Laserätzens 0,5-2,5 mJ/mm$^2$ beträgt.

4. Herstellungsverfahren nach Anspruch 3, wobei die Leistung des Laserätzens 1-2 mJ/mm$^2$ beträgt.

5. Herstellungsverfahren nach Anspruch 1, wobei die Durchbiegungsdifferenz basierend auf der folgenden Formel bestimmt wird:

$$\text{Durchbiegungsdifferenz} = 5{,}38 - 5{,}41 \times e^{-W/1{,}02}$$

wobei W die Leistung des einseitigen Laserätzens in mJ/mm$^2$ repräsentiert und die Durchbiegungsdifferenz in mm angegeben wird.

6. Herstellungsverfahren nach Anspruch 5, wobei die Differenz der Mengen der isolierenden Beschichtungen basierend auf der folgenden Formel bestimmt wird:

Differenz der Mengen der isolierenden Beschichtungen = $3 \times 10^{-5}$ - 0,407 $\times$ Durchbiegungsdifferenz,

wobei die Einheit der Differenz der Mengen der isolierenden Beschichtungen $g/m^2$ ist.

7. Herstellungsverfahren nach Anspruch 1, wobei die Menge der Isolierbeschichtung auf der ersten Oberfläche 4,0-4,5 $g/m^2$ beträgt.

8. Herstellungsverfahren nach Anspruch 1, wobei die Dicke H des Siliziumstahlsubstrats 0,18 mm $\leq$ H $\leq$ 0,23 mm beträgt.

9. Herstellungsverfahren nach Anspruch 2, wobei die Komponenten der Lösung der isolierenden Beschichtung, in Massenprozent, wie folgt sind:

mindestens eines von Aluminiumdihydrogenphosphat und Magnesiumdihydrogenphosphat: 2-25 %,
kolloidales Siliciumdioxid: 4-16 %,
Chromanhydrid: 0,15-4,50 %, und
der Rest Wasser und andere unvermeidbare Verunreinigungen.

10. Herstellungsverfahren nach Anspruch 1, wobei das Siliziumstahlsubstrat in folgenden Schritten aufeinanderfolgend hergestellt wird:

Schritt a: Schmelzen und Gießen,
Schritt b: Erhitzen,
Schritt c: Normalisieren,
Schritt d: Kaltwalzen,
Schritt e: Entkohlungstempern,
Schritt f: Endtempern und
Schritt g: Warmstrecktempern.

11. Herstellungsverfahren nach Anspruch 10, wobei das Herstellungsverfahren mindestens eine der folgenden Herstellungsprozessbedingungen erfüllt:

in Schritt c, Ausführen einer zweistufigen Normalisierungsbehandlung des Siliziumstahlsubstrats: Zunächst wird das Siliziumstahlsubstrat auf 1100-1200 °C erhitzt, anschließend mit einer Abkühlgeschwindigkeit von 1 °C/s bis 10 °C/s auf 900-1000 °C abgekühlt und schließlich mit einer Abkühlgeschwindigkeit von 10 °C/s bis 70 °C/s auf Raumtemperatur abgekühlt,
in Schritt d, Ausführen eines primären Kaltwalzens oder eines sekundären Kaltwalzens mit einem zwischenliegenden Temperschritt,
in Schritt e, Ausführen einer primären Rekristallisationstempern bei 800-900 °C, gefolgt vom Beschichten der Oberflächen des Siliziumstahlsubstrats mit einem Temperisolierungsmittel,
in Schritt f, Steuern einer Tempertemperatur auf 1100-1200 °C und Halten für 20-30 Stunden lang, und
in Schritt g, zunächst Erhitzen des Siliziumstahlsubstrats auf 800-900 °C, Halten für 10-30 Sekunden lang und anschließend Abkühlen mit einer Abkühlgeschwindigkeit von 5 °C/s bis 50 °C/s auf Raumtemperatur.

## Revendications

1. Procédé de fabrication d'un acier au silicium orienté à faible magnétostriction, dans lequel l'acier au silicium orienté comprend un substrat en acier au silicium et des revêtements isolants sur des surfaces du substrat en acier au silicium, et le procédé de fabrication comprend :

réaliser une gravure laser unilatérale sur le substrat en acier au silicium, dans lequel un côté du substrat en acier au silicium, sur lequel la gravure laser unilatérale est réalisée, est une première surface, et un côté opposé à la première surface est une seconde surface ;

déterminer une différence de déflexion entre la première surface et la seconde surface en fonction de la puissance de la gravure laser, et déterminer une différence de quantité des revêtements isolants sur la première surface et la seconde surface en fonction de la différence de déflexion ; et

former les revêtements isolants sur la première surface et la seconde surface, dans lequel la quantité du revêtement isolant sur la seconde surface est supérieure à celle sur la première surface, et la quantité du revêtement isolant sur la première surface et celle sur la seconde surface satisfont l'exigence concernant la différence de quantité des revêtements isolants.

2. Procédé de fabrication selon la revendication 1, dans lequel un procédé pour former les revêtements isolants comprend : enduire la première surface et la seconde surface avec une solution de revêtement isolant, puis cuire et fritter la solution de revêtement isolant pour former les revêtements isolants sur la première surface et la seconde surface.

3. Procédé de fabrication selon la revendication 1, dans lequel la puissance de la gravure laser est de 0,5-2,5 mJ/mm$^2$ .

4. Procédé de fabrication selon la revendication 3, dans lequel la puissance de la gravure laser est de 1-2 mJ/mm$^2$.

5. Procédé de fabrication selon la revendication 1, dans lequel la différence de déflexion est déterminée sur la base de la formule suivante :

$$\texttt{différence de déflexion} = 5,38 - 5,41 \times e^{-W/1,02}$$

dans laquelle W représente la puissance de la gravure laser en mJ/mm$^2$, et l'unité de la différence de déflexion est le mm.

6. Procédé de fabrication selon la revendication 5, dans lequel la différence de quantité des revêtements isolants est déterminée en fonction de la formule suivante :

différence de quantité des revêtements isolants = $3 \times 10^{-5}$ - 0,407 $\times$ différence de déflexion

dans lequel l'unité de la différence de quantité des revêtements isolants est le g/m$^2$.

7. Procédé de fabrication selon la revendication 1, dans lequel la quantité du revêtement isolant sur la première surface est de 4,0-4,5 g/m$^2$.

8. Procédé de fabrication selon la revendication 1, dans lequel l'épaisseur H du substrat en acier au silicium est : 0,18 mm≤H≤0,23 mm.

9. Procédé de fabrication selon la revendication 2, dans lequel les composants de la solution de revêtement isolant, en pourcentage en masse, sont les suivants :

au moins l'un parmi le dihydrogénophosphate d'aluminium et le dihydrogénophosphate de magnésium : 2 %-25 % ;
dioxyde de silicium colloïdal : 4 %-16 % ;
anhydride chromique : 0,15 %-4,50 % ; et
le complément étant de l'eau et d'autres impuretés inévitables.

10. Procédé de fabrication selon la revendication 1, dans lequel le substrat en acier au silicium est fabriqué par les étapes suivantes dans l'ordre :

étape a : fusion et coulée ;
étape b : chauffage ;
étape c : normalisation ;
étape d : laminage à froid ;
étape e : recuit de décarburation ;
étape f : recuit final ; et

étape g : recuit d'étirement à chaud.

11. Procédé de fabrication selon la revendication 10, dans lequel le procédé de fabrication satisfait à au moins l'une des conditions de processus de fabrication suivantes :

à l'étape c, réaliser un traitement de normalisation à deux stades sur le substrat en acier au silicium : d'abord, chauffer le substrat en acier au silicium à 1100-1200 °C, puis refroidir celui-ci à 900-1000 °C à une vitesse de refroidissement de 1 °C/s à 10 °C/s, et enfin refroidir celui-ci à température ambiante à une vitesse de refroidissement de 10 °C/s à 70 °C/s ;

à l'étape d, réaliser soit un laminage à froid primaire soit un laminage à froid secondaire avec une étape de recuit intermédiaire ;

à l'étape e, réaliser un recuit de recristallisation primaire à 800-900 °C, suivi d'enduire les surfaces du substrat en acier au silicium avec un agent isolant de recuit ;

à l'étape f, contrôler une température de recuit à 1100-1200 °C, et la maintenir pendant 20 à 30 heures ; et

à l'étape g, tout d'abord, chauffer le substrat en acier au silicium à 800-900 °C, maintenir celui-ci pendant 10-30 secondes, puis refroidir celui-ci à température ambiante à la vitesse de refroidissement de 5 °C/s à 50 °C/s.

Fig. 1

Fig. 2

Fig. 3

**EP 4 261 853 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107210109 A
- CN 106460111 A
- CN 106029917 A
- EP 2602343 A
- US 2015010762 A